# EUROPEAN PATENT SPECIFICATION

(11) **EP 4 469 679 B1**
(45) Date of publication and mention of the grant of the patent: **31.12.2025**
(21) Application number: 23716528.7
(22) Date of filing: 03.04.2023
(51) Int. Cl.: F03D 7/02, F03D 7/04

(54) **METHOD FOR OPERATING A WIND TURBINE AND SYSTEM FOR WIND POWER GENERATION**
VERFAHREN ZUM BETREIBEN EINER WINDTURBINE UND SYSTEM ZUR WINDENERGIEERZEUGUNG
PROCÉDÉ DE FONCTIONNEMENT D'UNE ÉOLIENNE ET SYSTÈME DE GÉNÉRATION D'ÉNERGIE ÉOLIENNE

(30) Priority: 07.04.2022 EP 22382338
(43) Date of publication of application: 04.12.2024
(73) Proprietor: Siemens Gamesa Renewable Energy Innovation & Technology S.L., 31621 Sarriguren (Navarra) (ES)
(72) Inventor: FERNANDEZ ROMERO, Ignacio, CP 31012 Pamplona (ES); MEINICKE, Alexander, 27568 Bremerhaven (DE); CAMPION MEZQUIRIZ, Alvaro, 31621 Sarriguren (ES)
(74) Representative: SGRE-Association
(86) International application number: PCT/EP2023/058612
(87) International publication number: WO 2023/194274

(56) References cited:
- EP-A1- 2 175 129
- US-A1- 2013 121 825

## Description

### FIELD OF THE INVENTION

The invention relates to a method for operating a wind turbine comprising a rotor with multiple rotor blades, at least one actuator for adjusting the pitch angle of the rotor blades and a generator driven by the rotor.

### BACKGROUND

In wind turbines the power below the rated power can be optimized by using an optimum pitch angle. Optimum pitch angles for given operating conditions can be obtained through theoretical aerodynamic models. Simplifications in these models and/or tolerances in the commission, production and installation process of the blades can result in a difference to the theoretical behavior or a pitch angle offset and therefore non-optimal operating conditions can result.

It is known to use optical measurements to determine the actual specifications of the produced blade and use these for the minimization of pitch error differences between different blades.

The discussed approaches for minimizing the error in pitch angle can be laborious and costly and typically have the drawback, that they cannot be used to compensate for a change of blade properties in use, e. g. by wear and tear.

It is also known to measure the power output of a wind turbine after changing the pitch angle to determine if the new pitch angle is advantageous. To allow for a robust detection of a potential improvement, relatively large pitch angle changes are necessary. Therefore, the efficiency of the power generation can be notably reduced during these measurements.

EP2175 129 A1 describes a method of determining the quality of an initial value for a blade pitch angle.

The problem to be solved is therefor to provide an improved approach for optimizing the pitch angle that preferably is easy and cost efficient to implement.

### SUMMARY

According to an aspect, the problem is solved by a method for operating a wind turbine, the wind turbine comprising a rotor with multiple rotor blades, at least one actuator for adjusting a pitch angle of at least one the rotor blades, and a generator to be driven by the rotor.
wherein in at least one mode of operation of the wind turbine the actuator is used to vary the pitch angle to improve the load condition of at least one component of the wind turbine, in particular of a bearing, by adding a time variable pitch offset to a given pitch angle, wherein the pitch offset is varied within a given offset interval of up to 2° by performing repetitions of an offset variation comprising the steps of
   increasing the pitch offset to a first pitch offset limit within the offset interval, and
   subsequently decreasing the pitch offset to a second pitch angle limit within the offset interval,
wherein the respective pitch offset limit is either constant or varies between at least some of the repetitions of the offset variation,
wherein the given pitch angle depends on a calibration information, wherein a measure for the variation of the output power of the generator due to the variation of the pitch angle is determined based on statistical analysis of measurements concerning the output power of the generator taken during at least 10 repetitions of the offset variation, and
wherein the calibration information is determined or updated based on this measure.

It was found that the small variations of the pitch angle, e. g. alternating in steps of 1.0 degree or 0.5 degree in both directions, e.g. each minute, are possible without a notable decrease in operational efficiency. Such small variations of the pitch angle are used in the inventive method to improve the load condition of at least one component. Using a slight variation of the loading conditions of e.g. a bearing or a gearset of a pitch transmission can notably increase the lifetime of such a component.

According to an alternative and/or additional aspect the problem is solved by a method according to claim 1, and/or according to the independent system claim having a system comprising a control unit which is adapted/configured for implement an embodiment of one of the described methods. The system is adapted for generating electrical energy from wind energy and comprises at least one wind turbine, the respective wind turbine comprising a rotor with multiple rotor blades, at least one actuator for adjusting the pitch angle of the rotor blades and a generator driven by the rotor, wherein the system further comprises at least one control unit, wherein the control unit is configured implement the inventive method to adjust the pitch angle for the at least one wind turbine or for at least one respective wind turbine.

In contrast to the skilled person's prejudice, it was found that even these small variations of the pitch angle can be used to determine an optimum pitch angle or at least improve the pitch angle, when aggregating and statistically evaluating power measurements over multiple repetitions of the offset variation. The sign of the variation of the output power can then indicate, in which direction the pitch angle needs to be changed to reach the optimum pitch angle, and the magnitude of the variation can indicate the amount of change necessary to reach the optimum pitch angle.

By this, it is prevented for the first time that rather large changes in the pitch angle to determine an optimum pitch angle are required. In detail, by this it is prevented that change in the output power due to the angle variation needs to surpass other influential factors, e.g. due to changes in wind speed and direction resulting in varying measurements concerning the output power. Therefore, a reduction in power output during this optimization with rather large changes in the pitch angle is mitigated/prevented, since only small variations in the pitch angle are used.

Therefore, the inventive method can be operated continuously in the background during normal operation of the wind turbine, in particular since the small pitch angle movements should be used anyway to improve the load condition of the component. The acquisition of measurement data to determine or update the calibration information is preferably only interrupted during non-normal operation, as discussed below. The inventive method therefore allows for a pitch angle optimization without any noticeable loss in efficiency.

It can be advantageous to limit the described pitch angle variation and/or the determination of the calibration information to a mode of operation of the wind turbine in which the wind turbine operates below the maximum rated power.

The previous discussion assumes, that the pitch angle should be optimized to maximize the output power. In some cases, it can be advantageous to optimize for a slightly lower power output. This can also be achieved by the discussed approach, e. g. by not aiming for a variation of the output power of approximately zero for the given pitch angle, but for a slightly higher or lower value.

The statistical analysis can comprise the determination of one or more statistical measures, e.g. a respective median or average value for a respective subgroup of measurements. Each subgroup can, e.g., include respective measurements measured at or close to the respective pitch angle limit. The determination of a median or an average can be used to eliminate or reduce the influence of other factors, e.g. changes in the wind speed and/or direction, to a certain degree. Larger changes in the operating conditions, e.g. major changes in the wind speed, can be accounted for by distinguishing between multiple operating conditions and determining a separate calibration information for each operating condition. Details of this approach will be discussed later.

Alternatively or additionally, statistical measures like, e.g., the variance can be a measure for the variation of the output power due to the pitch angle variation, in particular when determined for all measurements, or , when they are calculated for subgroups of the measurements, a measure for the consistency of the measurements within the subgroup and therefore e.g. the measurement quality.

Preferably, only the given pitch angle is varied based on the calibration information and optionally an operational parameter of the wind turbine as discussed below. The offset variation, in particular the first and/or second pitch offset limit, can be independent from the calibration information and optionally independent of the operational parameter and e.g. be described by a fixed or random pattern. The offset variation can describe a variation of the given pitch angle in both directions, either a symmetrical or an asymmetrical variation, or one of the offset limits can be equal to zero, causing a variation of the pitch angle in only one direction.

The offset variation and in particular the pitch offset limits can in particular be independent from the measurements concerning the output power acquired during the same and/or previous repetitions of the offset variation. Preferably all repetitions or at least multiple successive repetitions, e.g., at least 3 or 5 or 10 successive repetitions of the offset variation can use the same pitch offset limits. The pitch offset is preferably held at the respective pitch offset limit for at least 10% or 20% of the time taken for the respective repetition of the offset variation. The pitch offset is preferably continuously changed while not at one of the pitch offset limits. The offset variation is preferably repeated without a delay between the repeats.

The mode of operation, in which the variation of output power due to the pitch angle change is determined, is preferably the normal power production and this determination and the determination or update of the calibration information can be performed essentially continuously during normal operation, except for special states of operation, that occur e.g. during the start-up, while breaking to a stand still and/or in the presence of errors.

The control unit can be integrated in the respective wind turbine or it can be an external device that e. g. controls several wind turbines.

By determining or updating the calibration information repeatedly, an iterative optimization of the calibration information and therefore the given pitch angle can be performed. If e. g. at first a relatively large offset of the used pitch angles from the optimum pitch angle is present, the applied correction can be relatively large and is therefore a likely to over- or undershoot the optimum pitch angle. The error will however typically be reduced and therefore smaller corrections can be used in the next correction step.

An update of the calibration information can in particular comprise adding or subtracting an offset that is determined based on the measure for the variation of the power output to the previous calibration information. The discussed method can be combined with known approaches for determining a desired pitch angle, simply by adding an offset given by the calibration information to this other pitch angle.

When the method is used for a multitude of wind turbines, e. g. in a wind park, it is possible, that multiple wind turbines use the same basic calibration, e. g. when it is expected that the rotor blades are the same or at least very similar. If a clear tendency for a changing calibration is detected in a sub group of the wind turbines, e. g. when a sub group shows that a strong negative angle offset is necessary, the common calibration for the further wind turbines can also be adjusted.

The offset interval can be limited to a width of up to 1° or up to 0.5°. This can further increase the efficiency of the wind turbine and be sufficient for the determination of the calibration information and for improving the load condition of the component.

Additionally or alternatively, the statistical analysis can be applied to measurements concerning the output power of the generator taken during at least 20 or at least 50 of the repetitions of the offset variation and/or to at least 20 or at least 100 or at least 500 of the measurements. By increasing the number of considered measurements and/or repetitions, the same accuracy for determining the calibration information can be reached using smaller variations of the pitch angle. Alternatively, the precision of the determination of the calibration information can be further increased for a given size of the pitch angle variation.

The given pitch angle can additionally depend on at least one operational parameter of the wind turbine. The calibration information can, e.g., describe the dependence of an offset to an initial pitch angle or of the given pitch angle on the operational parameter, e.g., by providing a respective value of the offset or the given pitch angle for multiple intervals of the value of the operational parameter.

The operational parameter or at least one of the operational parameters can be an average of the output power of the generator and/or a wind speed and/or a tip-speed ratio and/or a torque of the rotor shaft of the wind turbine.

As previously mentioned, the pitch offset can be varied in each repetition of the offset variation according to a fixed variation pattern. Alternately, different patterns can be used for different repetitions, e.g. a respective random or pseudorandom pattern. When different patterns are used for different repetitions, the patterns can e.g. vary in the used pitch offset limits and/or in the timing of the variation, e.g. in the steepness or shape of slopes between the pitch offset limits.

The determination of the measure for the variation of the output power and the determination or update of the calibration information can be performed repeatedly, in particular continuously or in fixed intervals, while a calibration condition that depends on the or an operational parameter or at least one further operational parameter of the wind turbine is met. Additionally or alternatively, at least part of the output power of the generator can be fed to a power grid and/or an energy storage while the measure for the variation of the output power of the generators is determined. As previously mentioned, the proposed approach to calibration can be used during the normal operation and power generation of the wind turbine and can in particular be used with a wide range of operational parameters. It can however still be advantageous to not update the calibration in certain, in particular non-normal, operating conditions.

The further operational parameter or a respective further operational parameter can be the current pitch angle and/or the given pitch angle and/or the determined measure for the variation of the output power of the generator and/or a time elapsed since entering the or a mode of operation of the wind turbine, in which at least a part of the output power of the generator is fed to a power grid and/or an energy storage and/or the activation and/or a time since the least activation of a further actuator of the wind turbine used to adjust the yaw angle of the wind turbine and/or sensor data and/or forecast data concerning the temperature and/or humidity in the environment of the wind turbine.

As previously discussed, these further operational parameters can in particular be used to not update the calibration or not measure data on which the calibration is based or discard this data, when the parameters indicate, that there might be a data corruption or an uncertainty in the measurement data or more generally an operation outside the normal operation conditions. As discussed below, the determination of the calibration information can in particular be based on a multitude of power measurements and it is e. g. possible to suspend these power measurements or to discard measured data when the calibration condition is not fulfilled.

It is e. g. possible that the calibration condition can only be fulfilled when the current pitch angle and/or the given pitch angle are within an optimum pitch angle range, e. g. not too far from the expected optimum pitch angle.

A strong variation of the output power, e. g. a large difference between the minimum and the maximum measured power, can indicate strong changes of the wind power and therefore reduce the robustness of the discussed calibration procedure. Therefore, the calibration condition is preferably not fulfilled when the variation exceeds a threshold.

The proposed calibration is more robust, when the wind turbine is operating in stable operating conditions. Therefore, it can be advantageous, when the calibration condition can only be fulfilled, when a certain minimum time has elapsed since entering a mode of operation, in which the wind turbine generates power for a power grid and/or an energy storage. E. g. a delay of 20 minutes after the beginning of such a power generation can be used before the calibration condition can be fulfilled.

It can also advantageous, when a calibration during or close to a yaw movement is avoided. Therefore, the calibration condition can e. g. not be fulfilled during the activation of the further actuator or e. g. up to two minutes after the latest activation.

The calibration condition can also be not fulfilled when the sensor data and/or the forecast data indicate a risk of ice or other conditions that might hinder an error free calibration.

Since the calibration is preferably performed under normal operating conditions, the calibration condition can e. g. be not fulfilled when any alarm or warning in the wind turbine is detect, when the power output is curtailed, when the wind turbine is used in safe mode or when there is some other limitation.

During each repetition of the offset variation the pitch offset is held at the first pitch offset limit or within a given angular interval from the first pitch offset limit for a respective first time interval and is held at the second pitch offset limit or within a given angular interval from the second pitch offset limit for an respective second time interval, wherein first measurements concerning the output power of the generator are taken during at least part of the respective first time interval, second measurements concerning the output power of the generator are taken during at least part of the respective second time interval and the measure for the variation of the output power of the generator is determined based on the first measurements and the second measurements, in particular based on the average or the median of the first measurements and the average or the median of the second measurements, taken within a given measurement interval comprising multiple repetitions of the offset variation.

The measure for the variation of the output power can e. g. be the difference between the average or the median of the first measurements and the average or the median of the second measurements or be determined from this difference. The measurements concerning the power can be measurement values for the power or for variables on which the power depends, e. g. current and/or voltage measurements.

When the first and second time intervals alternate directly without extended intermediate time intervals and the pitch offset is essentially held at the respective pitch offset limit for the respective time interval, an essentially rectangular pattern for the pitch angle results. This is a good way to change the pitch angle to increase a component lifetime, as initially discussed.

As discussed, the statistical analysis can determine statistical properties of subgroups of the measurements and therefore, e.g., the respective average and/or median for the first and/or second measurement values. The use of average or median values can be sufficient, even when the pitch offset limits vary between repetitions, e.g., when the variation of the respective pitch angle limit is notably smaller than the difference between the pitch angle limits. For larger variations of the pitch angle limits, it can be advantageous to use a more detailed statistical analysis. It would, e.g., be possible to perform a regression based on the pairs of measurements and used pitch offset limits to determine a slope of this relationship and use this slope as a measure for the variation of the output power due to the pitch angle variation.

The measurement interval can include at least 10 or at least 20 or at least 50 repetitions of the offset variation. This improves the robustness of the determined calibration information and allows for the use of a smaller offset interval.

Since the wind flow can be disturbed by the pitch angle change and stable operating conditions are desirable for the calibration and therefore for the first and second measurements, it can be advantageous to not perform any measurements or discard measurements perform during an initial delay time during each first and the second interval. Literature, e.g. the document IEC 61400-12-1:2017, indicates an affection of the air flow by the pitch angle change for approximately three rotor diameters upstream from the wind turbine. If e. g. a rotor diameter of 100 meter is used and a wind speed of 10 meter per second is assumed, this would lead to a delay of 30 seconds. When the pitch angle has changed approximately every minute, approximately half of the first and second measurement interval can therefore be used for calibration purposes, even if this part of the respective measurement interval might also be disturbed, e.g., when the rotor speed is not yet stationary. It can however also be advantageous, to use alternations between the first pitch offset limit and the second pitch offset limit on a longer time frame to allow for longer settling times, so that e.g. the first and second time interval can each be three minutes or five minutes or ten minutes long. To increase the bearing lifetime, it might still be advantageous to performer slight variations of the pitch angle within respective time interval in this case. Therefore, it can be advantageous in this case to keep the pitch angle within a given angular interval from the respective pitch angle limit in the respective time interval. The angular interval can be noticeably smaller than the angular distance between the first and second pitch offset limit, e. g. less than 30 % or less than 20 % or less than 10 % of this angular distance.

It is also possible to use different variation patterns for the pitch angle change, e.g. a sine-shaped variation pattern. In this case it can be advantageous to only perform first and second measurements during relatively short sections of the respective time interval, in particular the sections of the movement close to the pitch offset limits. This leads to a strong difference in the measured powers. Additionally, the gradient of the pitch angle change in these areas is low and therefore the air flow is hardly disturbed.

In an alternative approach to timing the measurements it might also be advantageous to ensure, that at least some of the first and second measurements are performed in a short time interval. In this case the measurement is more robust with respect to changes in the operating conditions, e.g. to wind speed changes. It is e.g. possible to perform at least one first measurement close to the end of the respective first time interval and at least one second measurement close to the beginning of the flowing second time interval and/or vice versa. It is in particular possible to perform multiple first and second measurements respectively to average the measured power over at least one full rotation of the generator or the rotor. When this approach is used, it can be advantageous to directly calculate the difference between the powers determined from the first and second measurements performed within in a short time interval. This difference can then be averaged over longer times, e.g. over ten or twenty minutes.

The variation of the output power of the generator can be determined based on first measurements taken in multiple first time intervals separated by at least a single second time interval and/or on second measurements taken in multiple second time intervals separated by at least a single first time interval. It is in particular possible to perform an averaging over quite long stretches of operation time, e.g. a several days or weeks, to achieve a high precision. It is however also possible to only consider a few, e.g., only ten or twenty, repetitions of the offset variation. In this case it can be advantageous to only perform a minor change to the calibration information during each iteration of updating the calibration information. The pitch law used for determining the given pitch angle is therefore optimized in an iterative manner. To prevent runaway, limits for the calibration information or the resulting given pith angle can be set.

The measuring interval can end, once an ending condition is fulfilled, wherein the fulfilment of the ending condition depends firstly on the number of acquired first and/or a second measurements or on the number of these first and/or second measurements meeting a selection criterion that depends on the operational parameter and/or a secondly on a measure for the variance of the first and/or second measurements acquired during the measurement interval and/or meeting the selection criterion. The given criteria for the ending condition can in particular be used to ensure that a large number of measurements and a low variance are measured to ensure a robust calibration.

The ending condition can in particular be fulfilled, when the number exceeds or reaches a threshold while the measure for the variance is smaller or equal then a threshold. The ending condition can also be fulfilled, when the number and measure for the variance both exceed a respective further threshold, since this indicates bad measurement conditions, e.g. strong variations in the wind speed and/or measurement errors and therefore should lead to a discarding of the measured data and the start of a new acquisition, in particular after a certain waiting time.

As will be discussed below, it is possible to use different calibration information depending on the operational parameters or in general an operating condition of the wind turbine. It might e.g. be necessary to use different correction offsets at high and low wind speeds or at a high or low power generation by the generator. A differentiation between different wind speeds and therefore, e.g., power levels was found to be advantageous. It is therefore, e.g., possible to differentiate between different power levels, each, e.g., covering 10% of the rated power, as different operating conditions. The selection criterion can therefore select only measurements that are relevant for a calibration for certain operating conditions and the measurement interval for this calibration can end and the calibration can be updated when the ending conditional is fulfilled by these selected measurements.

Measurement intervals for calibrations for different operating conditions can overlap. It is e.g. possible that in a fist operating condition a first set of measurements is acquired, the operating conditions then changed to a second operating condition, in which further measurements are acquired, at a later point the operating condition returns to the first operating condition and additional measurements for the first operating condition are acquired and this leads to the measurement interval for a calibration for the fist operating condition to end while the measurement interval for the second operating condition can still continue on.

The measure for the variance can be the mathematical variance but also e.g. the square root of the mathematical variance and therefore the standard deviation.

The first and/or second time interval can extend over multiple revolutions of the rotor of the wind turbine.

Preferably respective first and/or second time interval extends over an integer number of full revolutions of the rotor of the wind turbine. This allows to average out the influence of the angular position of the rotor of the generator and of e.g. asymmetries of the rotor of the wind turbine.

The measure for the variation of the output power of the generator can be determined for multiple operating conditions, wherein the current operating condition is determined based on the or an operational parameter and/or on at least one further operational parameter of the wind turbine, wherein a separate calibration information is determined for each operating condition, wherein the given pitch angle depends on the calibration information for the current operating condition. It is in particular possible, that the respective calibration information describes an offset that is applied to an initial pitch angle at the given operating condition. It is e.g. possible to use a look-up table that provides the calibration information based on the operating condition, e.g. an offset to the initial pitch angle. This looked-up table can be updated when the calibration information is updated, e.g. when a measurement interval for the respective operating condition or a measurement interval used for all operating conditions ends.

The respective calibration information for the respective operating condition can be determined based on measurements of the output power of the generator acquired during the respective operating condition.

For at least a subset of the operating conditions, a respective parameter interval of the or the respective operational parameter and/or the or the respective further operational parameter can be defined, wherein these operating conditions can only be selected, when the or each operational parameter and/or the or each further operational parameter is within the respective parameter interval for that operational parameter and/or that further operational parameter for that operating condition. It is e.g. possible to define a fixed number of bins, e.g. five or eight bins, into which all measurements during which the operating parameter was in a certain interval assigned to the bin are sorted, to determine a calibration for this bin and therefore for an operating mode defined by this bin.

The measurement values for the measurements for the output power of the generator for a respective first operating condition can be retained after determining the presence of a different operating condition, wherein at a later point in time, after a return to the first operating condition, additional measurements for the output power of the generator are recorded and used in conjunction with the retained measurement values to determine the measure for the variation of the output power for the generator for the first operating condition. This allows the acquisition of data over a long time and therefore a robust calibration, even when separate calibrations are determined for multiple operating modes.

The operational parameter or at least one of the operational parameters can be an average output power of the generator and/or a wind speed and/or a tip-speed ratio and/or a torque and/or a rotational speed of the rotor of the wind turbine. The average output power that is used as the operational parameter can in particular be an output power that is averaged over a multitude of first and second time intervals. The described operational parameters are in particular useful, since they correlate with a loading of the wind turbine blades and therefore with a potential change of the optimum pitch angle on the one hand and a potentially change of the necessary offset provided by the calibration on the other hand.

The actuator can be used to repeat the variation of the pitch angle due to the repetition of the offset variation continuously in the at least one mode of operation of the wind turbine and/or for at least 1 hour or 6 hours and/or for at least 100 or 1000 revolutions of the rotor of the wind turbine. As previously discussed, the variation of the pitch angle serves an additional purpose besides the determination or update of the calibration information, e.g., to extend the lifetime of the pitch bearing, and should therefore be performed as continuously as possible, e.g., always during normal operation.

Features discussed with respect to inventive method can be transferred with the discussed advantage to the inventive system and vice versa. The control unit can be a common control unit for all of the wind turbines or multiple control units for multiple sub groups of the wind turbines can be used. It is also possible, that a separate control unit for each of the wind turbines is used or that the system only comprises a single wind turbine. The control unit can be integrated in the wind turbine or one of the wind turbines or it can be arranged outside of the wind turbine, e.g. in a control center for a wind park.

Additionally and/or alternatively a further aspect is disclosed, and/or in particular as an embodiment of one of a precedingly described aspect(s) and/or embodiment(s), namely, a method for operating a wind turbine, in particular an offshore wind turbine, further in particular a floating offshore wind turbine, and/or for feeding electrical and/or chemical energy to an electricity and/or chemical grid, the method comprising the following steps:
executing steps of an embodiment or of a combination of embodiments of a method as disclosed supra, and/or operating an embodiment of a device as disclosed supra,
generating, by the wind turbine, electrical power and/or electrical energy, and in particular generating at least partially from the electrical energy, further in particular, by transforming electrical energy into hydrogen by electrolysis, chemical energy in form of a gas or liquid, in particular in the form of hydrogen,
transmitting, at least partially, the electrical power, the electrical energy, and/or the chemical energy to an energy receiving arrangement, in particular wherein the receiving arrangement is not positioned in international waters, is positioned onshore, and/or is positioned within a 12-miles-zone of a respective sovereign national state over which the respective state has jurisdiction, and
supplying, at least partially, the electrical power, the electrical energy, and/or the chemical energy to an electrical and/or chemical utility grid, in particular to an onshore electrical and/or chemical utility grid and/or chemical/electrical storage.

The term "chemical energy" includes means for storing energy in a chemical substance such as in hydrogen. A chemical energy grid could for example be a gas (hydrogen) grid and/or storage device.

It is to be understood that the features mentioned above, for example, increasing the pitch offset to a first pitch offset limit within the offset interval, and subsequently decreasing the pitch offset to a second pitch angle limit within the offset interval, and those yet to be explained below or disclosed supra can be used not only in the respective combinations indicated, but also in other combinations, for example with an embodiment comprising a specific configuration of the controller of the system for power generation, without leaving the scope of the present invention. In particular, the features of the different aspects, embodiments, and/or methods of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 an exemplary embodiment of a system for wind power generation according to the present invention,
Fig. 2 a flow chart for an exemplary embodiment of a method according to the present invention, and
Fig. 3 an example for a change of a pitch angle over time and the resulting power generated by the generator of a wind turbine.

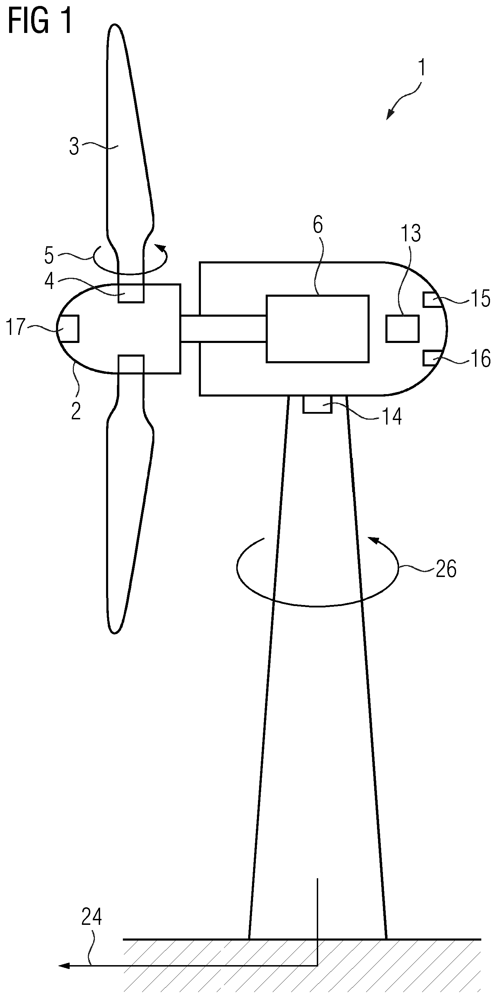

Fig. 1 shows a system for wind power generation that comprises a single wind turbine 1 in the example. Alternate embodiments could also comprise a larger number of wind turbines. The wind turbine 1 comprises a rotor 2 with multiple rotor blades 3, actuators 4 for adjusting the pitch angle 5 of the rotor blades 3 and a generator 6 driven by the rotor 2. Additionally, it comprises a further actuator 14 for adjusting the yaw angle 26. In at least one mode of operation the wind turbine 1 outputs power to a power grid 24. Alternatively, it could e.g. output a power to an energy storage, e.g. to a battery or to an energy storage using electrolysis to generate hydrogen for energy storage.

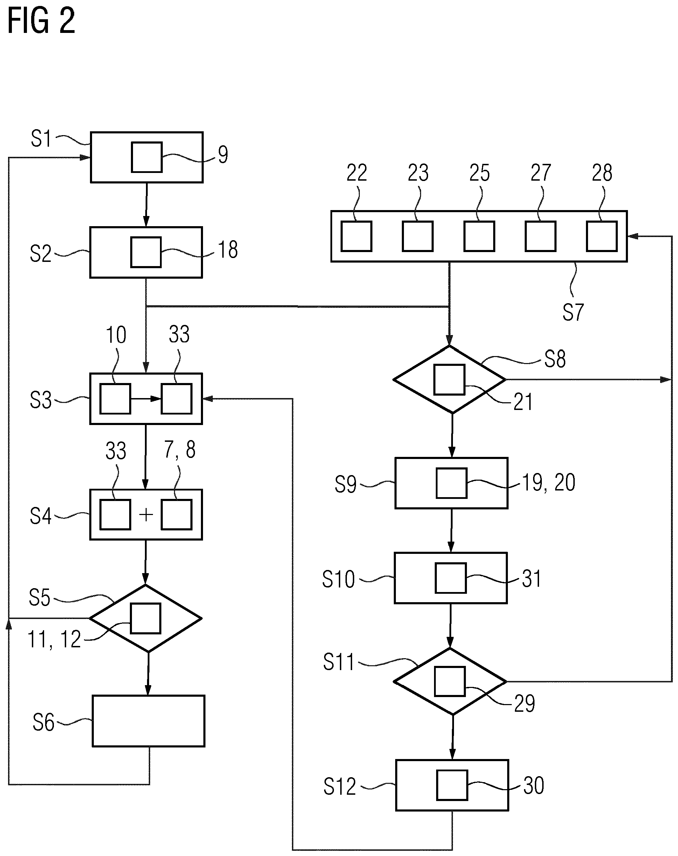

A control unit 13 is integrated within the wind turbine 1 in the example, but could also be an external device that could e.g. control multiple wind turbines, controls the operation of the wind turbine 1 according to a method that will now be discussed with additional reference to fig. 2.

In step S1 at least one operational parameter 9 of the wind turbine 1 is acquired by the control unit 13. The following example will assume that an average power output of the generator 6 is used as the operational parameter 9. It would however e.g. also be possible to additionally or alternatively use a wind speed, that could e.g. be determined by a sensor 17, and/or a tip-speed-ratio that could be determined based on this wind speed and the rotations per minute that could e.g. be measured in the generator 6, as operational parameters.

Based on the operational parameter 9, in step S2 the current operating condition 18 is selected from multiple possible operating conditions. In the example a respective parameter interval for the operational parameter 9 is assigned to each of the operating conditions 18 and the operating condition matching the current parameter value is selected. It is e.g. possible that different operating conditions define five different power levels or power intervals for the wind turbine 1 and the power level containing the measured average power is selected.

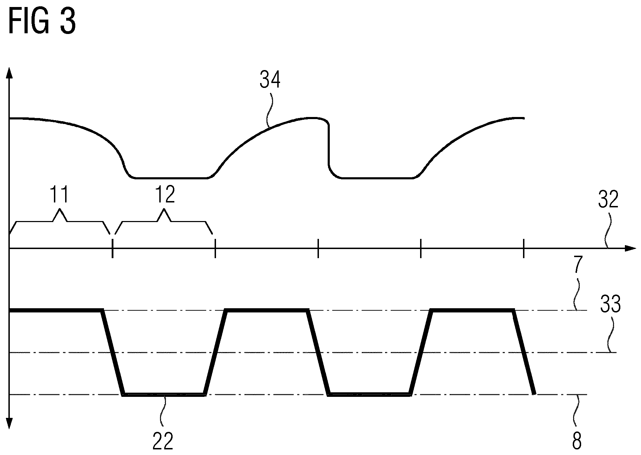

As shown in fig. 3, the pitch angle 5, 22 of the rotor blades 3 is typically varied around a given pitch angle 33 using an upper and lower pitch offset limit 7, 8 to limit the variation. In step S3 this given pitch angle 33 is selected based on the current operating condition 18.

In principle it would be possible to assign a fixed respective given pitch angle 33 to each operating condition 18. As already discussed in the general part of the description, tolerances during the production of the wind turbine blades 3 and/or the use of incomplete models can lead to undesirable pitch angle offsets that would lower the efficiency of the wind turbine 1 when a fixed assignment would be used.

Therefore, the method shown in fig. 2 additionally uses a calibration information 10 to determine the given pitch angle 33. It is in particular possible that a separate calibration information 10 is used for each of the operating conditions 18. The calibration information 10 could directly describe the given pitch angle 33. Preferably, the calibration information 10 does however only describe offsets from an initial base value.

In step S4 the actuator 4 is controlled to set or keep the current pitch angle 5, 22 to the sum of the given pitch angle 33 and a currently selected one of the pitch offset limits 7, 8. As shown in the lower half of fig. 3, an approximately rectangular pattern for the pitch angle control is used in which the pitch offset is alternately increased to a first pitch offset limit 7 and then lowered to a second pitch offset limit 8 in continuous repetitions of a pitch offset variation. For a first time interval 11, the pitch angle is kept at a first pitch offset limit 7. During the following second time interval 12 the pitch angle is moved to the second pitch offset limit 8. After the second time interval ends, a further first time interval 11 begins and so on. Preferably, each of the time intervals 11, 12 extends over several full rotations of the rotor 2.

In step S5 it is checked, if the current time interval 11, 12 has finished. It is e.g. possible to start a timer at the beginning of the respective time interval 11, 12 and compare the timer value with a threshold value. If the time interval 11, 12 did not yet end, the method is repeated from step S1.

Otherwise, in step S6 a control mode is switched to use the other one of the pitch offset limits 7, 8. Therefore, during the next repetition of the steps S1 to S6, the actuator 4 is controlled to move the pitch angle 5, 22 to the other pitch offset limit 7, 8.

The remaining steps S7 to S12 concern the updating of the calibration information 10. The initial steps S7 and S8 ensure that measurements for updating the calibration are only taken in stable measuring conditions. The following steps then serve to determine the variation of the output power of the generator 6, in the example for various operating conditions 18, and to update the calibration data 10 based on that variation.

In step S7 several further operational parameters of the wind turbine 1 are determined. In the example the current pitch angle 22, an elapsed time 23 since entering a mode of operation in which at least part of the output power of the generator 6 is fed to the power grid 24, a time 25 since the last activation of the further actuator 14 to adjust the yaw angle 26 of the wind turbine 1 and sensor and forecast data 27, 28 are determined. The sensor data 27 can e.g. be recorded by an internal sensor 15 of the wind turbine 1 and forecast data can be received via a communication unit 16, e.g. from a server providing weather data. The sensor data 27 and forecast data 28 can in particular concern the temperature and/or humidity in the environment of the wind turbine and can in particular be relevant for forecasting the presence of ice on the wind turbine 1 which corresponds to a special operating condition during which a calibration for the normal operation should not be performed.

In step S8 a calibration condition 21 is checked that depends on the further operational parameters determined in step S7 and can additionally e.g. depend on the operational parameter 9, the given pitch angle 33 determined during a previous iteration of the method, the presence of an error mode, etc.

The calibration condition 21 is chosen in such a way that it is fulfilled during normal operation and that it is not fulfilled when disturbances are expected. Details concerning the calibration condition 21 were already discussed in the general part of the description and are therefore not repeated. When the calibration condition 21 is not fulfilled, the method is repeated, e.g., after a certain delay, from a previous step, e.g., step S7. When the calibration condition 21 is fulfilled, the method instead proceeds to step S9.

In step S9 a first measurement 19 is performed, if the wind turbine 1 currently operates in one of the first time intervals 11, and a second measurement 20 is performed, if the wind turbine 1 currently operates in one of the second time intervals 12.

The development of the output power 34 of the generator 6 over time 32 is schematically shown in fig. 3. It can be recognized that the output power 34 tends to be lower when the pitch angle 5, 22 is at the pitch offset limit 8 then when the pitch angle 5, 22 is at the pitch offset limit 7. This can be used to determine the variation of the output power 34 due to the variation of the pitch angle 5, 22 as discussed below.

As already discussed in the general part of the description, it can be advantageous to not perform measurements 19, 20 during the full respective time interval 11, 12, but only during a subinterval, e.g. disregard the first couple of ten seconds of the respective time interval 11, 12.

In step S10 a selection criterion is applied to the measurement 19, 20 recorded in step S9 to assign this measurement 19, 20 to one of several bins, wherein each bin is assigned to one of the possible operating conditions 18. Measurement data is aggregated, e.g. in a respective buffer for the bin, such that after a certain amount of time each bin will comprise a multitude of measurements 19, 20, wherein first and second measurements 19, 20 are kept separate within each bin.

Since the output power 34 depends on other factors, e.g. turbulences and changes in wind speed, besides the pitch angle 5, 22, individual measurements 19, 20 are rather noisy. Therefore, it is advantageous to aggregate measurements 19, 20 over rather long time periods, in particular over multiple first and second time intervals 11, 12, by acquiring and evaluating measurement data over at least 10 or 20 or 100 or 500 repetitions of the offset variation. As already discussed in the general section of the description, it is even possible to aggregate measurements over multiple changes of the operating condition 18.

In step S11 an ending condition 29 is checked. In the example the ending condition 29 is checked separately for each of the bins and therefore for each of the operating conditions 18. The ending condition 29 can in particular be fulfilled when a certain threshold for the number of acquired first and second measurements for the respective bin and therefore meeting the respect selection criterion 31 where acquired, while at the same time a measure for the variance, e.g. the standard deviation, for the first and second measurements is smaller than a second threshold value. This indicates that the measured data is sufficiently robust to allow for an update of the calibration information 10 for this operating condition 18 and that the method can therefore progress with step S12. When the ending condition 29 is not fulfilled for a respective bin, the method is repeated from step S7.

With the discussed approach calibration information 10 for different operating conditions 18 can be updated at different times. Alternatively, it would be possible to only update any calibration information 10, when the ending condition 29 is fulfilled for all bins and therefore all operating conditions 18.

In step S12 a measure 30 for the variation of the output power 34 of the generator 6 due to the variation of the pitch angle 5, 22 between the two pitch angle limits 7, 8 is determined by performing a statistical analysis of the measurements concerning the output power 37. In the examples this is achieved by calculating an average of all first measurements in the respective bin and then subtracting an average of all second measurements in the respective bin to calculate an average difference between first and second measurements for the bin. As discussed in the general section of the description, alternate approaches are also possible.

Optionally, the measure 30 can be scaled using a calculated wind power that can e.g. be determined from a wind speed measured by the sensor 17. This is however often not necessary, since the different operating conditions 18 can already take the different wind speeds into account.

As discussed in detail in the general section, the sign of the measured 30 indicates, in which direction the optimal pitch angle lies from the current given pitch angle 33. The magnitude of the measure 30 indicates the size of the offset from the optimum pitch angle.

In a simple example the update to the calibration information 10 for the respective operating condition 18 can be a selection between a number of fixed corrections. If the absolute value of the measure 30 is below a certain threshold, an offset of 0° can be used and therefore the calibration information 10 can stay unchanged. When the absolute value of the measure 30 exceeds a first threshold, a small correction of e.g. 0,25°, can be used. When a second threshold is exceeded by the absolute value of the measure 30, a larger correction, e.g. a correction step of 0,5°, can be applied.

Since the described method for updating the calibration information 10 is performed continuously over most of the operating time of a wind turbine, even a limitation to small adjustments during a single iteration of the described method can be used to compensate for rather large offsets from an optimum pitch angle. It is therefore e.g. sufficient to use a single threshold for the absolute value of the measure 30. Using multiple thresholds can however be advantageous to achieve a faster correction, in particular when the aggregation of measurements for each correction is rather long, e.g. several days.

Although the present invention has been described in detail with reference to the preferred embodiment, the present invention is not limited by the disclosed examples from which the skilled person is able to derive other variations without departing from the scope of the invention as defined in the appended claims.

While specific embodiments are disclosed herein, various changes and modifications can be made without departing from the scope of the invention. The present embodiments are to be considered in all respects as illustrative and non-restrictive, and all changes coming within the meaning of the appended claims are intended to be embraced therein. It has to be noted that embodiments of the invention have been described with reference to different subject matters. In particular, some embodiments have been described with reference to apparatus type claims, such as the wind turbine comprising the rotor with multiple rotor blades, at least one actuator for adjusting the pitch angle of the rotor blades, a generator driven by the rotor, and the at least one control unit, whereas other embodiments have been described with reference to method type claims, such as the offset variation comprising the steps of increasing the pitch offset to a first pitch offset limit within the offset interval, and subsequently decreasing the pitch offset to a second pitch angle limit within the offset interval. However, a person skilled in the art will gather from the above description that, unless other notified, in addition to any combination of features belonging to one type of subject matter, also any combination between features relating to different subject matters, in particular between features of the apparatus type claims and features of the method type claims, such as a combination of the wind turbine comprising the rotor with multiple rotor blades, at least one actuator for adjusting the pitch angle of the rotor blades, a generator driven by the rotor, and the at least one control unit, with the step that the offset variation comprising the steps of increasing the pitch offset to a first pitch offset limit within the offset interval, and subsequently decreasing the pitch offset to a second pitch angle limit within the offset interval, is considered as to be disclosed with this application.

## Claims

1. Method for operating a wind turbine (1) comprising
a rotor with multiple rotor blades (3), at least one actuator (4) for adjusting a pitch angle (5, 22) of at least one the rotor blades (3), and a generator (6) driven by the rotor (2),
wherein in at least one mode of operation of the wind turbine (1) the actuator (4) is used to vary at least one of the pitch angles (5, 22) to improve a load condition of at least one component of the wind turbine (1), in particular of a bearing of a rotor blade (3), by adding a time variable pitch offset to a given pitch angle (33), wherein the pitch offset is varied within a given offset interval of up to 2° by performing repetitions of an offset variation comprising the steps of
increasing the pitch offset to a first pitch offset limit (7) within the offset interval, and
subsequently decreasing the pitch offset to a second pitch angle limit (8) within the offset interval,
wherein the respective pitch offset limit is either constant or varies between at least some of the repetitions of the offset variation,
wherein the given pitch angle (33) depends on a calibration information (10), wherein a measure (30) for the variation of the output power (34) of the generator (6) due to the variation of the pitch angle (5, 22) is determined based on a statistical analysis of measurements (19, 20) concerning the output power (37) of the generator taken during at least 10 of the repetitions of the offset variation,
wherein the calibration information (10) is determined or updated based on this measure (30),
wherein a respective measure (30) for the variation of the output power (34) of the generator (6) is determined for multiple operating conditions (18),
wherein a current operating condition (18) is determined based on the or an operational parameter (9) and/or on at least one further operational parameter of the wind turbine (1),
wherein a separate calibration information (10) is determined for each operating condition (18), and
wherein the given pitch angle (33) depends on the calibration information (10) for the current operating condition (18).

2. Method according to claim 1, wherein for at least a subset of the operating conditions (18), a respective parameter interval of the or the respective operational parameter (9) and/or the or the respective further operational parameter is defined, wherein these operating conditions (18) can only be selected, when the or each operational parameter (9) and/or the or each further operational parameter is within the respective parameter interval for that operational parameter (9) and/or that further operational parameter for that operating condition (18).

3. Method according to claim 1 or 2,
wherein measurement values for the measurements (19, 20) for the output power (34) of the generator (6) for a respective first operating condition (18) are retained after determining the presence of a different operating condition (18),
wherein at a later point in time, after a return to the first operating condition (18), additional measurements (19, 20) for the output power (34) of the generator (6) are recorded and used in conjunction with the retained measurement values to determine the measure (30) for the variation of the output power (34) of the generator (6) for the first operating condition (18).

4. Method according to one of the preceding claims,
wherein the offset interval is limited to a width of up to 1° or up to 0.5°,
wherein the statistical analysis is applied to measurements (19, 20) concerning the output power (37) of the generator taken during at least 20 or at least 50 of the repetitions of the offset variation, and/or
wherein the statistical analysis is applied to at least 20 or at least 100 or at least 500 of the measurements (19, 20).

5. Method according to one of the preceding claims,
wherein the given pitch angle (33) additionally depends on at least one operational parameter (9) of the wind turbine (1), and/or
wherein the pitch offset is varied in each repetition of the offset variation according to a fixed variation pattern.

6. Method according to claim 5, wherein the operational parameter (9) or at least one of the operational parameters (9) is an average of the output power of the generator (6), a wind speed, a tip-speed ratio, and/or a torque of the rotor shaft of the wind turbine (1).

7. Method according to one of the preceding claims, wherein the determination of the measure (30) for the variation of the output power (34) and the determination or update of the calibration information (10) are performed repeatedly, in particular continuously or in fixed intervals, while a calibration condition (21) that depends on the or an operational parameter (9) and/or on at least one further operational parameter of the wind turbine (1) is met.

8. Method according to claim 7, wherein the further operational parameter or a respective further operational parameter is the current pitch angle (22) and/or the given pitch angle (33) and/or the determined measure (30) for the variation of the output power (34) of the generator (6) and/or a time (23) elapsed since entering the or a mode of operation of the wind turbine (1), in which at least part of the output power (34) of the generator (6) is fed to a power grid (24) and/or an energy storage and/or the activation and/or a time (25) since the last activation of a further actuator (14) of the wind turbine (1) used to adjust the yaw angle (26) of the wind turbine (1) and/or sensor data (27) and/or forecast data (28) concerning the temperature and/or humidity in the environment of the wind turbine (1).

9. Method according to one of the preceding claims,
wherein during each repetition of the offset variation the pitch offset is held at the first pitch offset limit (7) or within a given angular interval from the first pitch offset limit (7) for a respective first time interval (11) and
is held at the second pitch offset limit (8) or within a given angular interval from the second pitch offset limit (8) for a respective second time interval (12),
wherein first measurements (19) concerning the output power (37) of the generator (6) are taken during at least part of the respective first time interval (11),
second measurements (20) concerning the output power (34) of the generator (6) are taken during at least part of the respective second time interval (12) and
the measure (30) for the variation of the output power (34) of the generator (6) is determined based on the first measurements (19) and the second measurements (20),
in particular based on the average or the median of the first measurements (19) and the average or the median of the second measurements (20), taken within a given measurement interval comprising multiple repetitions of the offset variation.

10. Method according to claim 9, wherein the measurement interval ends, once an ending condition (29) is fulfilled, wherein the fulfilment of the ending condition (29) depends firstly on the number of acquired first and/or second measurements (19, 20) or on the number of these first and/or second measurements (19, 20) meeting a selection criterion (31) that depends on the operational parameter (9) and/or secondly on a measure for the variance of the first and/or second measurements (19, 20) acquired during the measurement interval and/or meeting the selection criterion (31).

11. Method according to one of the claims 8 or 9, wherein the respective first and/or second time interval (11, 12) extend over multiple revolutions of the rotor (2) of the wind turbine (1).

12. Method according to one of the claims 8 to 11, wherein the respective first and/or second time interval (11, 12) extends over an integer number of full revolutions of the rotor (2) of the wind turbine (1).

13. Method according to one of the preceding claims, wherein the actuator (4) is used to repeat the variation of the pitch angle (5, 22) due to the repetitions of the offset variation continuously in the at least one mode of operation of the wind turbine (1) and/or for at least 1 hour or 6 hours and/or for at least 100 or 1000 revolutions of the rotor of the wind turbine.

14. System for wind power generation, comprising at least one wind turbine (1), the respective wind turbine (1) comprising a rotor (2) with multiple rotor blades (3), at least one actuator (4) for adjusting the pitch angle (5, 22) of the rotor blades (3) and a generator (6) driven by the rotor (2), wherein the system comprises at least one control unit (13), wherein the control unit (13) is designed to implement a method according to one of the preceding claims to adjust the pitch angle (5, 22) for the at least one wind turbine (1) or for at least one respective wind turbine (1).

## Patentansprüche

1. Verfahren zum Betreiben einer Windkraftanlage (1), die Folgendes umfasst:
einen Rotor mit mehreren Rotorblättern (3), mindestens einen Aktuator (4) zum Einstellen eines Anstellwinkels (5, 22) mindestens eines der Rotorblätter (3) und einen Generator (6), der durch den Rotor (2) angetrieben wird,
wobei in mindestens einem Betriebsmodus der Windkraftanlage (1) der Aktuator (4) verwendet wird, um mindestens einen der Anstellwinkel (5, 22) zu variieren, um eine Lastbedingung von mindestens einer Komponente der Windkraftanlage (1),
insbesondere eines Lagers eines Rotorblatts (3), durch Hinzufügen eines zeitlich variablen Anstellversatzes zu einem vorgegebenen Anstellwinkel (33) zu verbessern, wobei der Anstellversatz mit einem vorgegeben Versatzintervall von bis zu 2° durch das Durchführen von Wiederholungen einer Versatzvariation, die die folgenden Schritte umfasst, variiert wird:
Erhöhen des Anstellversatzes auf einen ersten Anstellversatzgrenzwert (7) innerhalb des Versatzintervalls, und anschließend Verringern des Anstellversatzes auf einen zweiten Anstellversatzgrenzwert (8) innerhalb des Versatzintervalls,
wobei der jeweilige Anstellversatzgrenzwert entweder konstant ist oder zumindest zwischen einigen der Wiederholungen der Versatzveränderung variiert,
wobei der vorgegebene Anstellwinkel (33) von Kalibrierungsinformationen (10) abhängig ist, wobei ein Maß (30) für die Variation der Ausgangsleistung (34) des Generators (6) aufgrund der Variation des Anstellwinkels (5, 22) basierend auf einer statistischen Analyse der Messungen (19, 20) bezüglich der Ausgangsleistung (37) des Generators, die während mindestens 10 der Wiederholungen des Versatzvariation durchgeführt worden sind, bestimmt wird,
wobei die Kalibrierungsinformationen (10) basierend auf diesem Maß (30) bestimmt oder aktualisiert werden,
wobei ein entsprechendes Maß (30) für die Variation der Ausgangsleistung (34) des Generators (6) für mehrere Betriebsbedingungen (18) bestimmt wird,
wobei eine aktuelle Betriebsbedingung (18) basierend auf dem oder einem Betriebsparameter (9) und/oder auf mindestens einem weiteren Betriebsparameter der Windkraftanlage (1) bestimmt wird,
wobei für jede Betriebsbedingung (18) separate Kalibrierungsinformationen (10) bestimmt werden, und
wobei der vorgegebene Anstellwinkel (33) von den Kalibrierungsinformationen (10) für die aktuelle Betriebsbedingung (18) abhängig ist.

2. Verfahren nach Anspruch 1, wobei zumindest für eine Teilmenge der Betriebsbedingungen (18) ein entsprechendes Parameterintervall des oder des entsprechenden Betriebsparameters (9) und/oder des oder des entsprechenden weiteren Betriebsparameters definiert wird, wobei diese Betriebsbedingungen (18) nur dann ausgewählt werden können, wenn der oder jeder Betriebsparameter (9) und/oder der oder jeder weitere Betriebsparameter innerhalb des entsprechenden Parameterintervalls für diesen Betriebsparameter (9) und/oder diesen weiteren Betriebsparameter für diese Betriebsbedingung (18) liegt.

3. Verfahren nach Anspruch 1 oder 2,
wobei Messwerte für die Messungen (19, 20) für die Ausgangsleistung (34) des Generators (6) für eine entsprechende erste Betriebsbedingung (18) nach dem Bestimmen der Anwesenheit einer anderen Betriebsbedingung (18) gehalten werden,
wobei zu einem späteren Zeitpunkt nach einer Rückkehr zu der ersten Betriebsbedingung (18) zusätzliche Messungen (19, 20) für die Ausgangsleistung (34) des Generators (6) aufgezeichnet werden und in Verbindung mit den gehaltenen Messwerten verwendet werden, um das Maß (30) für die Variation des Ausgangsleistung (34) des Generators (6) für die erste Betriebsbedingung (18) zu bestimmen.

4. Verfahren nach einem der vorhergehenden Ansprüche,
wobei das Versatzintervall auf eine Breite von bis zu 1° oder bis zu 0,5° begrenzt ist,
wobei die statistische Analyse auf Messungen (19, 20) bezüglich der Ausgangsleistung (37) des Generators angewendet wird, die während mindestens 20 oder mindestens 50 der Wiederholungen der Versatzvariation durchgeführt worden sind, und/oder wobei die statistische Analyse auf mindestens 20 oder mindestens 100 oder mindestens 500 der Messungen (19, 20) angewendet wird.

5. Verfahren nach einem der vorhergehenden Ansprüche,
wobei der vorgegebene Anstellwinkel (33) zusätzlich von mindestens einem Betriebsparameter (9) der Windkraftanlage (1) abhängig ist, und/oder
wobei der Anstellversatz bei jeder Wiederholung der Versatzvariation entsprechend einem festen Variationsmuster variiert wird.

6. Verfahren nach Anspruch 5, wobei die Betriebsparameter (9) oder mindestens einer der Betriebsparameter (9) ein Durchschnittswert der Ausgangsleistung des Generators (6) einer Windgeschwindigkeit, einem Spitze-Geschwindigkeits-Verhältnis und/oder einem Drehmoment der Rotorwelle der Windkraftanlage (1) ist.

7. Verfahren nach einem der vorhergehenden Ansprüche, wobei die Bestimmung des Maßes (30) für die Variation der Ausgangsleistung (34) und die Bestimmung oder Aktualisierung der Kalibrierungsinformationen (10) wiederholt durchgeführt werden, insbesondere kontinuierlich oder in festen Intervallen, während eine Kalibrierungsbedingung (21), die von dem oder einem Betriebsparameter (9) und/oder von mindestens einem weiteren Betriebsparameter der Windkraftanlage (1) abhängig ist, erfüllt ist.

8. Verfahren nach Anspruch 7, wobei der weitere Betriebsparameter oder ein entsprechender weiterer Betriebsparameter der aktuelle Anstellwinkel (22) und/oder der vorgegebene Anstellwinkel (33) und/oder das bestimmte Maß (30) für die Variation der Ausgangsleistung (34) des Generators (6) und/oder eine Zeit (23), die seit dem Betreten des oder eines Betriebsmodus der Windkraftanlage (1) verstrichen ist, in der zumindest ein Teil der Ausgangsleistung (34) des Generators (6) in ein Leistungsnetz (24) und/oder einen Energiespeicher eingespeist worden ist, und/oder die Aktivierung und/oder eine Zeit (25) seit der letzten Aktivierung eines weiteren Aktuators (14) der Windkraftanlage (1), der verwendet wird, um den Azimutwinkel (26) der Windkraftanlage (1) einzustellen, und/oder Sensordaten (27) und/oder Vorhersagedaten (28) bezüglich der Temperatur und/oder Feuchtigkeit in der Umgebung der Windkraftanlage (1) ist.

9. Verfahren nach einem der vorhergehenden Ansprüche,
wobei während jeder Wiederholung der Versatzvariation der Anstellversatz für ein entsprechendes erstes Zeitintervall (11) auf dem ersten Anstellversatzgrenzwert (7) oder innerhalb eines vorgegebenen Winkelintervalls von dem ersten Anstellversatzgrenzwert (7) gehalten wird, und
für ein entsprechendes zweites Zeitintervall (12) auf dem zweiten Anstellversatzgrenzwert (8) oder innerhalb eines gegebenen Winkelintervalls von dem zweiten Anstellversatzgrenzwert (8) gehalten wird,
wobei erste Messungen (19) bezüglich der Ausgangsleistung (37) des Generators (6) während zumindest eines Teils des entsprechenden ersten Zeitintervalls (11) durchgeführt werden, zweite Messungen (20) bezüglich der Ausgangsleistung (34) des Generators (6) während zumindest eines Teils des entsprechenden zweiten Zeitintervalls (12) durchgeführt werden, und
das Maß (30) für die Variation der Ausgangsleistung (34) des Generators (6) basierend auf den erste Messungen (19) und den zweiten Messungen (20) bestimmt wird,
insbesondere basierend auf dem Durchschnittswert oder dem Median der ersten Messungen (19) und dem Durchschnittswert oder dem Median der zweiten Messungen (20), die innerhalb eines vorgegebenen Messungsintervall, das mehrere Wiederholungen der Versatzvariation umfasst, durchgeführt werden.

10. Verfahren nach Anspruch 9, wobei das Messungsintervall endet, sobald eine Endbedingung (29) erfüllt ist, wobei die Erfüllung der Endbedingung (29) erstens von der Zahl der erfassten ersten und/oder zweiten Messungen (19, 20) oder von der Zahl dieser ersten und/oder zweiten Messungen (19, 20), die ein Auswahlkriterium (31) erfüllen, das von dem Betriebsparameter (9) abhängig ist, und/oder zweitens von einem Maß für die Varianz der ersten und/oder zweiten Messungen (19, 20), die während des Messintervalls erfasst worden sind und/oder das Auswahlkriterium (31) erfüllen, abhängig ist.

11. Verfahren nach einem der Ansprüche 8 oder 9, wobei sich das entsprechende erste und/oder zweite Zeitintervall (11, 12) über mehrere Umdrehungen des Rotors (2) der Windkraftanlage (1) erstreckt.

12. Verfahren nach einem der Ansprüche 8 bis 11, wobei sich das entsprechende erste und/oder zweite Zeitintervall (11, 12) über eine ganze Zahl von vollständigen Umdrehungen des Rotors (2) der Windkraftanlage (1) erstreckt.

13. Verfahren nach einem der vorhergehenden Ansprüche, wobei der Aktuator (4) verwendet wird, um die Variation des Anstellwinkels (5, 22) aufgrund der Wiederholungen der Versatzvariation in dem mindestens einen Betriebsmodus der Windkraftanlage (1) und/oder für mindestens 1 Stunde oder 6 Stunden und/oder für mindestens 100 oder 1000 Umdrehungen des Rotors der Windkraftanlage kontinuierlich zu wiederholen.

14. System zur Windkrafterzeugung, das mindestens eine Windkraftanlage (1) umfasst, wobei die entsprechende Windkraftanlage (1) einen Rotor (2) mit mehreren Rotorblättern (3), mindestens einen Aktuator (4) zum Einstellen des Anstellwinkels (5, 22) der Rotorblätter (3) und einen Generator (6), der durch den Rotor (2) angetrieben wird, umfasst, wobei das System mindestens eine Steuereinheit (13) umfasst, wobei die Steuereinheit (13) ausgelegt ist, um ein Verfahren nach einem der vorhergehenden Ansprüche zu implementieren, um den Anstellwinkel (5, 22) für die mindestens eine Windkraftanlage (1) oder für mindestens eine entsprechende Windkraftanlage (1) einzustellen.

## Revendications

1. Procédé de fonctionnement d'une éolienne (1) comprenant un rotor avec de multiples pales de rotor (3), au moins un actionneur (4) pour ajuster un angle de calage (5, 22) d'au moins une des pales de rotor (3), et un générateur (6) entraîné par le rotor (2),
dans lequel, dans au moins un mode de fonctionnement de l'éolienne (1), l'actionneur (4) est utilisé pour faire varier au moins l'un des angles de calage (5, 22) pour améliorer un état de charge d'au moins un composant de l'éolienne (1), en particulier d'un palier d'une pale de rotor (3), en ajoutant un décalage de calage variable dans le temps à un angle de calage donné (33), dans lequel le décalage de calage est varié dans un intervalle de décalage donné allant jusqu'à 2° en effectuant des répétitions d'une variation de décalage comprenant les étapes consistant à
augmenter le décalage de calage jusqu'à une première limite de décalage de calage (7) dans l'intervalle de décalage, et
ensuite réduire le décalage de calage jusqu'à une deuxième limite d'angle de calage (8) dans l'intervalle de décalage,
dans lequel la limite de décalage de calage respective est soit constante, soit elle varie entre au moins certaines des répétitions de la variation de décalage,
dans lequel l'angle de calage donné (33) dépend d'une information d'étalonnage (10), dans lequel une mesure (30) pour la variation de la puissance de sortie (34) du générateur (6) due à la variation de l'angle de calage (5, 22) est déterminée sur la base d'une analyse statistique de mesures (19, 20) concernant la puissance de sortie (37) du générateur prises pendant au moins 10 des répétitions de la variation de décalage,
dans lequel les informations d'étalonnage (10) sont déterminées ou mises à jour sur la base de cette mesure (30),
dans lequel une mesure respective (30) pour la variation de la puissance de sortie (34) du générateur (6) est déterminée pour de multiples conditions de fonctionnement (18),
dans lequel une condition de fonctionnement actuelle (18) est déterminée sur la base du ou d'un paramètre opérationnel (9) et/ou d'au moins un paramètre opérationnel additionnel de l'éolienne (1),
dans lequel une information d'étalonnage séparée (10) est déterminée pour chaque condition de fonctionnement (18), et dans lequel l'angle de calage donné (33) dépend des informations d'étalonnage (10) pour la condition de fonctionnement actuelle (18).

2. Procédé selon la revendication 1, dans lequel pour au moins un sous-ensemble des conditions de fonctionnement (18), un intervalle de paramètre respectif du paramètre opérationnel respectif (9) et/ou du paramètre opérationnel additionnel respectif est défini, dans lequel ces conditions de fonctionnement (18) ne peuvent être sélectionnées que, lorsque le ou chaque paramètre opérationnel (9) et/ou le ou chaque paramètre opérationnel additionnel est dans l'intervalle de paramètre respectif pour ce paramètre opérationnel (9) et/ou ce paramètre opérationnel additionnel pour cette condition de fonctionnement (18).

3. Procédé selon la revendication 1 ou 2,
dans lequel des valeurs de mesure pour les mesures (19, 20) pour la puissance de sortie (34) du générateur (6) pour une première condition de fonctionnement respective (18) sont retenues après la détermination de la présence d'une condition de fonctionnement différente (18),
dans lequel à un instant ultérieur, après un retour à la première condition de fonctionnement (18), des mesures supplémentaires (19, 20) pour la puissance de sortie (34) du générateur (6) sont enregistrées et utilisées conjointement avec les valeurs de mesure retenues pour déterminer la mesure (30) pour la variation de la puissance de sortie (34) du générateur (6) pour la première condition de fonctionnement (18).

4. Procédé selon l'une des revendications précédentes,
dans lequel l'intervalle de décalage est limité à une largeur allant jusqu'à 1° ou jusqu'à 0,5°,
dans lequel l'analyse statistique est appliquée à des mesures (19, 20) concernant la puissance de sortie (37) du générateur prises pendant au moins 20 ou au moins 50 des répétitions de la variation de décalage, et/ou dans lequel l'analyse statistique est appliquée à au moins 20 ou au moins 100 ou au moins 500 des mesures (19, 20).

5. Procédé selon l'une des revendications précédentes,
dans lequel l'angle de calage donné (33) dépend en plus d'au moins un paramètre opérationnel (9) de l'éolienne (1), et/ou
dans lequel le décalage de calage est varié à chaque répétition de la variation de décalage selon un schéma de variation fixe.

6. Procédé selon la revendication 5, dans lequel le paramètre opérationnel (9) ou au moins l'un des paramètres opérationnels (9) est une moyenne de la puissance de sortie du générateur (6), d'une vitesse du vent, d'un rapport de vitesse en bout de pale et/ou d'un couple de l'arbre de rotor de l'éolienne (1).

7. Procédé selon l'une des revendications précédentes, dans lequel la détermination de la mesure (30) pour la variation de la puissance de sortie (34) et la détermination ou la mise à jour des informations d'étalonnage (10) sont effectuées de manière répétitive, en particulier en continu ou à des intervalles fixes, alors qu'une condition d'étalonnage (21) qui dépend du ou d'un paramètre opérationnel (9) et/ou d'au moins un paramètre opérationnel additionnel de l'éolienne (1) est satisfaite.

8. Procédé selon la revendication 7, dans lequel le paramètre opérationnel additionnel ou un paramètre opérationnel additionnel respectif est l'angle de calage actuel (22) et/ou l'angle de calage donné (33) et/ou la mesure déterminée (30) pour la variation de la puissance de sortie (34) du générateur (6) et/ou un temps (23) écoulé depuis l'entrée dans le ou un mode de fonctionnement de l'éolienne (1), dans lequel au moins une partie de la puissance de sortie (34) du générateur (6) est injectée dans un réseau électrique (24) et/ou un stockage d'énergie et/ou l'activation et/ou un temps (25) depuis la dernière activation d'un actionneur additionnel (14) de l'éolienne (1) utilisé pour ajuster l'angle d'azimut (26) de l'éolienne (1) et/ou des données de capteur (27) et/ou des données de prévision (28) concernant la température et/ou l'humidité dans l'environnement de l'éolienne (1).

9. Procédé selon l'une des revendications précédentes,
dans lequel, pendant chaque répétition de la variation de décalage, le décalage de calage est maintenu à la première limite de décalage de calage (7) ou dans un intervalle angulaire donné à partir de la première limite de décalage de calage (7) pour un premier intervalle de temps respectif (11) et
est maintenu à la deuxième limite de décalage de calage (8) ou dans un intervalle angulaire donné à partir de la deuxième limite de décalage de calage (8) pour un deuxième intervalle de temps respectif (12),
dans lequel des premières mesures (19) concernant la puissance de sortie (37) du générateur (6) sont prises pendant au moins une partie du premier intervalle de temps respectif (11),
des deuxièmes mesures (20) concernant la puissance de sortie (34) du générateur (6) sont prises pendant au moins une partie du deuxième intervalle de temps respectif (12) et la mesure (30) pour la variation de la puissance de sortie (34) du générateur (6) est déterminée sur la base des premières mesures (19) et des deuxièmes mesures (20),
en particulier sur la base de la moyenne ou de la médiane des premières mesures (19) et de la moyenne ou de la médiane des deuxièmes mesures (20), prises dans un intervalle de mesure donné comprenant de multiples répétitions de la variation de décalage.

10. Procédé selon la revendication 9, dans lequel l'intervalle de mesure se termine, une fois qu'une condition de fin (29) est satisfaite, dans lequel la satisfaction de la condition de fin (29) dépend en premier lieu du nombre de premières et/ou deuxièmes mesures (19, 20) acquises ou du nombre de ces premières et/ou deuxièmes mesures (19, 20) satisfaisant un critère de sélection (31) qui dépend du paramètre opérationnel (9) et/ou en deuxième lieu d'une mesure pour la variance des premières et/ou deuxièmes mesures (19, 20) acquises pendant l'intervalle de mesure et/ou satisfaisant au critère de sélection (31).

11. Procédé selon l'une des revendications 8 ou 9, dans lequel les premier et/ou deuxième intervalles de temps respectifs (11, 12) s'étendent sur de multiples tours du rotor (2) de l'éolienne (1).

12. Procédé selon l'une des revendications 8 à 11, dans lequel les premier et/ou deuxième intervalles de temps respectifs (11, 12) s'étendent sur un nombre entier de tours complets du rotor (2) de l'éolienne (1).

13. Procédé selon l'une des revendications précédentes, dans lequel l'actionneur (4) est utilisé pour répéter en continu la variation de l'angle de calage (5, 22) due aux répétitions de la variation de décalage dans l'au moins un mode de fonctionnement de l'éolienne (1) et/ou pendant au moins 1 heure ou 6 heures et/ou pour au moins 100 ou 1000 tours du rotor de l'éolienne.

14. Système de génération d'énergie éolienne, comprenant au moins une éolienne (1), l'éolienne respective (1) comprenant un rotor (2) avec de multiples pales de rotor (3), au moins un actionneur (4) pour ajuster l'angle de calage (5, 22) des pales de rotor (3) et un générateur (6) entraîné par le rotor (2), dans lequel le système comprend au moins une unité de commande (13), dans lequel l'unité de commande (13) est conçue pour mettre en œuvre un procédé selon l'une des revendications précédentes pour ajuster l'angle de calage (5, 22) pour l'au moins une éolienne (1) ou pour au moins une éolienne respective (1).
